# EUROPEAN PATENT SPECIFICATION

(11) **EP 2 048 059 B1**
(45) Date of publication and mention of the grant of the patent: **09.02.2011**
(21) Application number: 07118139.0
(22) Date of filing: 09.10.2007
(51) Int. Cl.: B62D 1/19

(54) **Automatically collapsible device for steering wheel**
Automatisch zusammenschiebbare Vorrichtung für ein Lenkrad
Dispositif automatiquement pliable pour volant de direction

(43) Date of publication of application: 15.04.2009
(73) Proprietor: Fong, Jian-Jhong, Changhua City, Changhua County (TW)
(72) Inventor: Fong, Jian-Jhong, Changhua City, Changhua County (TW)
(74) Representative: Hellmich, Wolfgang

(56) References cited:
- EP-A- 0 324 907
- EP-A- 0 634 314
- DE-A1- 4 421 509
- FR-A- 2 289 367

## Description

The present invention relates to a collapsible technique for steering column with steering wheel; particularly, the collapsible device enables the steering wheel and the steering column automatically and immediately to slide with an angle of inclination away from the driver when any part of the automobile experiences a crash, thereby effectively reducing the injuries caused to the driver by crashing into the steering wheel during the accident.

In the conventional art, a steering wheel, provided right in front of a driver, is a steering device for controlling a direction movement of an automobile. For ease of control, the conventional steering wheel is generally provided close to the driver's body. As a result, when the automobile crashes into something in front of it, or is crashed at the back or at the side, the driver will crash into the steering wheel due to the inertia effect caused by the car crash, or the steering wheel will hit the driver due to an external force. The impact typically causes serious injuries to the driver's head, chest and sometimes causes death. A variety of impact and energy dispersing devices has been developed and attached to an collapsible automobile body, a safety belt, a collapsible steering wheel, an auxiliary air bag and other devices so as to absorb and provide buffer to the impact that may otherwise be passed onto the driver and passengers.

In order to prevent the driver from crashing into the steering wheel and protect the safety of the driver, a variety of auxiliary air bags has been developed and attached at the front or side within the automobile. When a car crash occurs, the auxiliary air bag is inflated to provide buffer and protection to the driver. However, in reality, when the car crash occurs, the auxiliary air bag is immediately inflated due to the high speed gas explosion, and the distance between the driver and the steering wheel is unduly close which may in turn cause the driver moving forward to crash into the auxiliary air bag during the immediate inflation.

Additionally, the steering wheel is designed to be located right in front of the driver and in close proximity. The distance and space between the driver and the steering wheel for capacity and depth of the inflated auxiliary air bag are restricted with certain conditions, especially when the accident is caused under high speed. Under the protection of the auxiliary air bag with restricted capacity and depth, the driver is usually injured or killed by crashing into the auxiliary air bag or the steering wheel.

Furthermore, a collapsible steering column has been developed and equipped in the automobile, utilizing the inertia force generated by the driver's crashing into the auxiliary air bag and steering wheel to generate a collapsing effect on the steering wheel. However, the driver has already crashed into the auxiliary air bag and the steering wheel at this time, and thus when compared to the conventional non-collapsible steering wheel, this collapsible steering column may absorb energy to reduce the impact, but during the process when the collapsible steering column collapses, the driver may still be injured in certain levels. As traffic accident statistic report shows, the driver may still be killed after the auxiliary air bag has been inflated and the collapsible steering wheel collapsed. Therefore, there's still some improvements for the current automobile safety protection. The best safety protection design should allow the steering column with the steering wheel to automatically and immediately move away from the driver at an angle of inclination and collapse when a car accident occurs and at the same time provide an auxiliary air bag in greater capacity and depth to enhance the safety protection.

EP 0 634 314 A1 discloses a steering column assembly which is axially retractable in the event of impact, in particular for an automobile vehicle, comprises a support structure fixed to the rest of the vehicle. On the steering column assembly the ends of a steering column body are fixed. A steering shaft being disposed within the steering column body and being rotatable but prevented from moving in the translation in the body. One of the ends of the steering shaft is adapted to receive a steering wheel, while the other end of the steering shaft is adapted to be connected to the vehicle steering mechanism. The steering column assembly further comprises means for axially retracting the body. These retracting means comprise a force generator actuated upon impact for sliding the steering column body relative to the support structure. The end of the steering column body to which the force generator is connected by a connecting member, comprises for example a mounting member provided with lateral flanges the ends of which include for example guide shoes adapted to cooperate with complementary slideways of the support structure, when the body is displaced relative to the support structure so as to guide this displacement. However, in the normal position of operation, this end of the body is fixed to the support structure by releasable fixing means constituted for example by frictional immobilizing means or by shearable bolts. Finally the steering shaft comprises two telescopic parts and the steering column body also comprises two telescopic parts. The corresponding parts of the shaft and body are axially held in position relative to each other.

Furthermore, EP 0 634 314 A1 discloses with respect to the independent claim an automatic shell for a steering wheel, comprising a steering wheel, provided in a vehicle through a steering column, and a moving unit provided to move a shell and a first cover, said first cover provided within said vehicle, said shell provided with said steering column with said steering wheel, said inner shell and said first cover provided with a threaded bolt, so as to move said shell and said first cover when a car accident occurs such that said steering column with said steering wheel is moved in relation to said vehicle, an actuation unit capable of sensing a crash when said car accident occurs, and enabling said moving unit to move said steering column so as to selectively move said steering wheel away from the driver, a telescopic device one end thereof connecting to said steering column with said steering wheel, the other end thereof connecting to a connector, said connector capable of controlling a rotating direction of front wheels, said telescopic device capable of selectively absorbing a moving distance of said steering column's collapse when said car accident occurs.

The present invention is developed to eliminate or reduce the problems and drawbacks of the conventional auxiliary air bag and steering wheel at the time of the car crash. In other words, the injury caused by the above mentioned accident may be resolved if the steering column may be immediately and automatically moved away from the driver at an angle of inclination and collapse at the time of the accident so as to provide a greater capacity and depth of the auxiliary air bag, thereby providing the driver with greater safety and life protection.

Therefore, the present invention is to provide a collapsible device for steering wheel capable of automatically moving forward and being attached to the steering column; such that when any portion of the car experiences a crash, the steering column with the steering wheel is immediately and automatically moved away from the driver at an angle of inclination and collapse so as to provide a greater capacity and depth for the auxiliary air bag, thereby resolving the injury problem caused by the above mentioned car accident and further improving the safety and life protection of the driver.

It is the object of this invention to provide an automatic shell for a steering wheel which guides the steering column in case of retraction.

This object is achieved by the subject matter of the independent claim.

Preferred embodiments of the invention are the subject matters of the dependent claim.
Fig. 1 is a schematic view of the collapsible device implemented in an automobile body in accordance with the present invention;
Fig. 2 is a three-dimensional exploded schematic view of the collapsible device, showing a configuration of each element;
Fig. 3 is a schematic view of the overall appearance of the collapsible device;
Fig. 4 is a side view of the collapsible device;
Fig. 5A is a schematic view of a first movement of the collapsible device, illustrating the status of the steering column of the shell thereof moving at an angle of inclination away from the driver;
Fig. 5B is a schematic view of a second movement of the collapsible device, illustrating the status of completing the steering column of the shell thereof moving at an angle of inclination away from the driver;
Fig. 5C is a schematic view of a third movement of the collapsible device, illustrating the status of the first sleeve thereof further movement to make the steering column of the shell away from the driver;
Fig. 6 is a schematic view of a second embodiment of the collapsible device in accordance with the present invention;
Fig. 7 is a schematic view of a third embodiment of the collapsible device in accordance with the present invention;
Fig. 8 is a schematic view of another embodiment of the actuating unit of the collapsible device in accordance with the present invention;
Fig. 9 is a schematic view of an actuation unit of the collapsible device in accordance with the present invention; and
Fig. 10 is a schematic view of another embodiment of the actuation unit of the collapsible device in accordance with the present invention

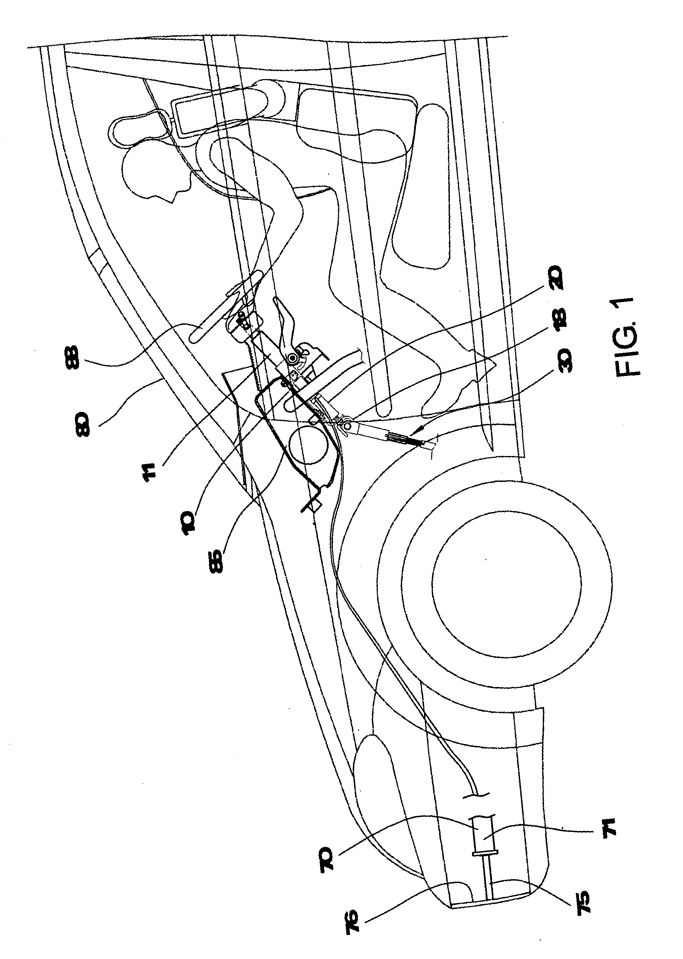

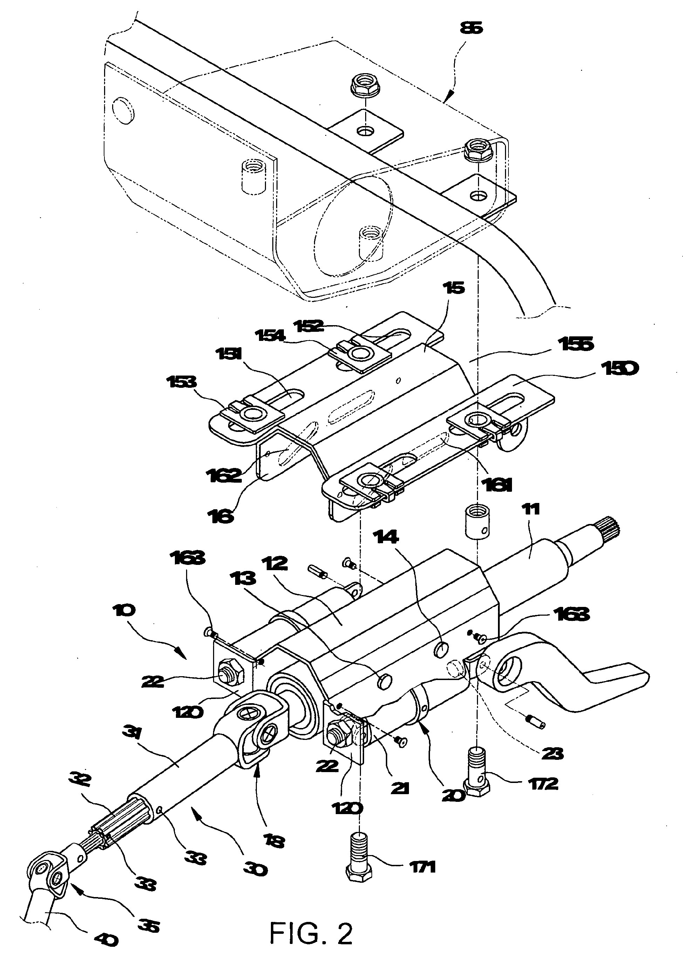

The present invention provides an automatic collapsible device for steering wheels capable of selectively moving the steering wheel away from the driver. Referring to Figs. 1 and 2, the shell 10 is provided inside an vehicle 80. The shell 10 may include a steering column 11 for locking a steering wheel 88, an first cover 15 for the steering column 11 to selectively slide and move, a moving unit 20 for moving a shell 12 and the first cover 15, a telescopic device 30 for changing a length of the steering column 11 after the movement, and one or more actuation units 70 for enabling the moving unit 20 such that when vehicle 80 experiences a crash, the steering wheel 88 provided on the steering column 11 may be automatically moved at an angle of inclination away from the driver through the moving unit 20 and collapse. As a result, the driver may be prevented from crashing into the steering wheel 88 in the accident. A fixed frame 85 is provided within vehicle 80, such as a dashboard frame, so as to support the shell 10.

Refer to Figs. 1, 2, 3 and 4 for a detailed structure of the present invention. The steering column 11 having a shell 12 with an "n" shape at a cross section can be fixed and pivotally connected to the shell 12. Two side pieces opposite of the steering wheel of the shell 12 are provided with a side plate 120 bending outward, respectively so as to lock the moving unit 20. A front and a back of outer side for the two side pieces of the shell 12 is provided with a boss 13 and a second sliding block 14, respectively.

The shell 12 of the steering column 11 is slidably provided within the first cover 15 with a corresponding shape. A middle section of the two sides of the first cover 15 is formed with a lateral portion 150 protruding outward, respectively. A front end and a back end of the two lateral portions 150 of the first cover 15 are provided with a first slot 151 and a second slots 152, respectively such that the steering column 11 may utilize the first and second slots 151 and 152 to generate a movement closer to or away from the driver. The first and second slots 151, 152 of the first cover 15 are provided with slide 153 and 154, respectively, so as to improve the smoothness of the sliding movement. The first and second slots 151 and 152 may utilize a first threaded bolt 171 and a second threaded bolts 172, respectively, so as to be locked on the frame 85 of vehicle 80. Furthermore, the two sides' bottom edge of the first cover 15 are provided with a side piece 16 protruding downward. A first slot 161 and a second slot 162 are formed at a front and back ends of the outer surface of the two side pieces 16, respectively. The first and second slotss 161 and 162 may allow the first and second sliding bosses 13 and 14 of the shell 12 to slide correspondingly, wherein the back end of the second slot 162 is extended downward with a slope section so as to allow the steering column 11 to move at an angle of inclination. Furthermore, one or more releasable latches 163 are provided between the side pieces 16 of the first cover 15 and the shell 12. The releasable latch 163 may be a safety lock or pin made of plastic or soft metal materials so as to selectively affix the shell 12 within the first cover 15.

When the vehicle 80 experiences a crash, the releasable latch 163 may be selectively cut off such that the shell 12 may move the steering column 11 in relation to the first cover 15. One end of the first cover 15 corresponding to the steering wheel 88 is formed with a see through groove 155 such that when the steering column 11 moves away from the driver at an angle of inclination, the steering column 11 and the first cover 15 may be prevented from an interference effect.

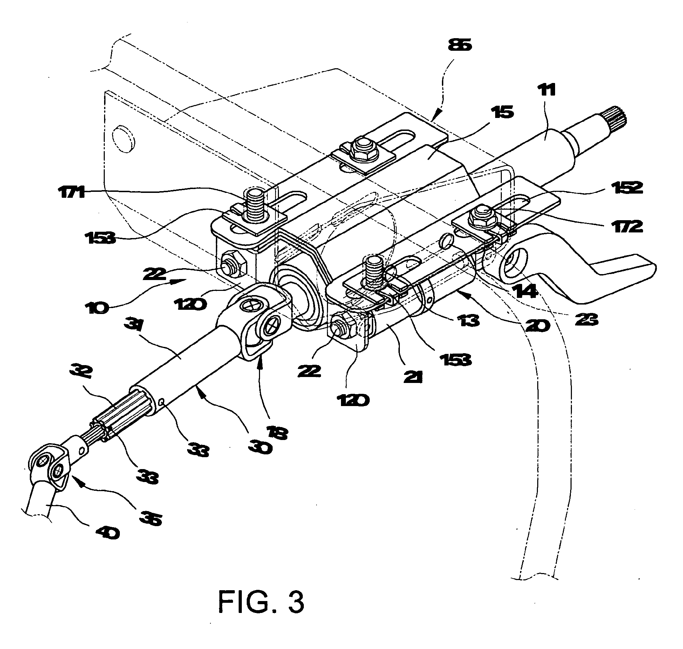

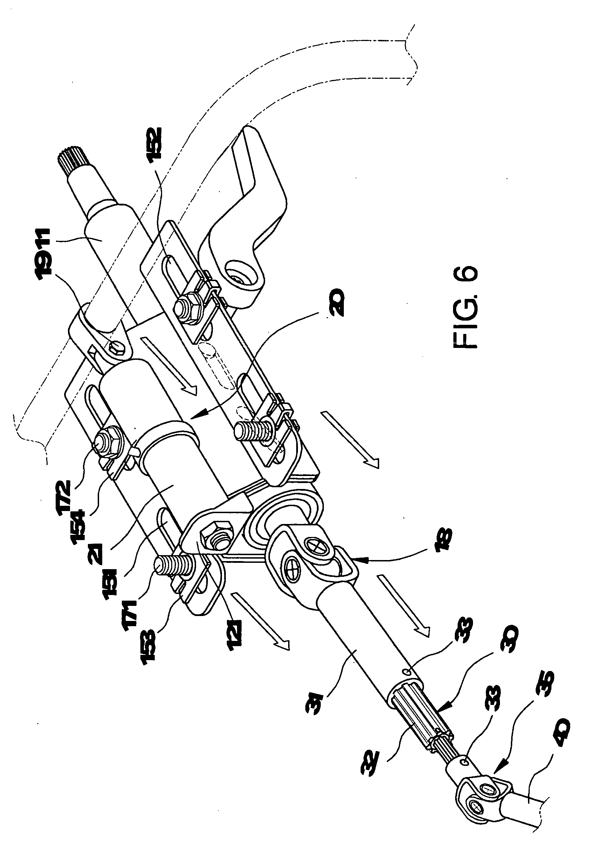

The moving unit 20 may be provided at two sides of an outer circumference of the first cover 15 or an upper surface thereof, as shown in Fig. 6. Take an example as the moving unit 20 is provided at the two sides. As shown in Figs. 2 and 3, the moving unit 20 may be a cylinder 21, having at least one end extended with a rod. The present invention may implement the cylinder 21 with a first rod 22 and a second rod 23 extended at two ends thereof. An enabling force of the cylinder 21 to enable the first rod 22 and the second rod 23 may come from an actuation unit 70 for selective enablement. The acting force may come from hydraulic oil, liquid, high pressure gas or explosive gas or a mixture thereof.

The actuation unit 70 may be enabled by a direct hit of the vehicle 80, actuated by liquid (as shown in Fig. 1), or a signal from an Electronic Control Unit (ECU), such as a signal to activate the inflation of the auxiliary air bag. The first rod 22 of the cylinder 21 may be locked to the side plate 120 of the shell 12. The second rod 23 of the cylinder 21 may be locked to the frame 85 of the vehicle 80 through a second threaded bolt 172, as shown in Figs. 2 and 3, such that when the first and second rods 22 and 23 of the moving unit 20 are extended, the shell 12 may move the steering column 11 in relation to the movement of the first cover 15 along with vehicle 80, thereby moving the steering wheel 88 on the steering column 11 away from the driver.

Take the example where the moving unit 20 is provided on the upper surface, please refer to Fig. 6. A single plate 121 is provided at a top back edge of the shell 12 protruding upward. The first rod 22 of the cylinder 21 is locked to the single plate 121. Additionally, the second rod 23 is locked to vehicle 80 by a third threaded bolt 19, as shown in Fig. 6 such that when the first and second rods 22 and 23 of the moving unit 20 are extended, the shell 12 may move the steering column 11 in relation to the first cover 15 along with vehicle 80, thereby moving the steering wheel 88 on the steering column 11 away from the driver.

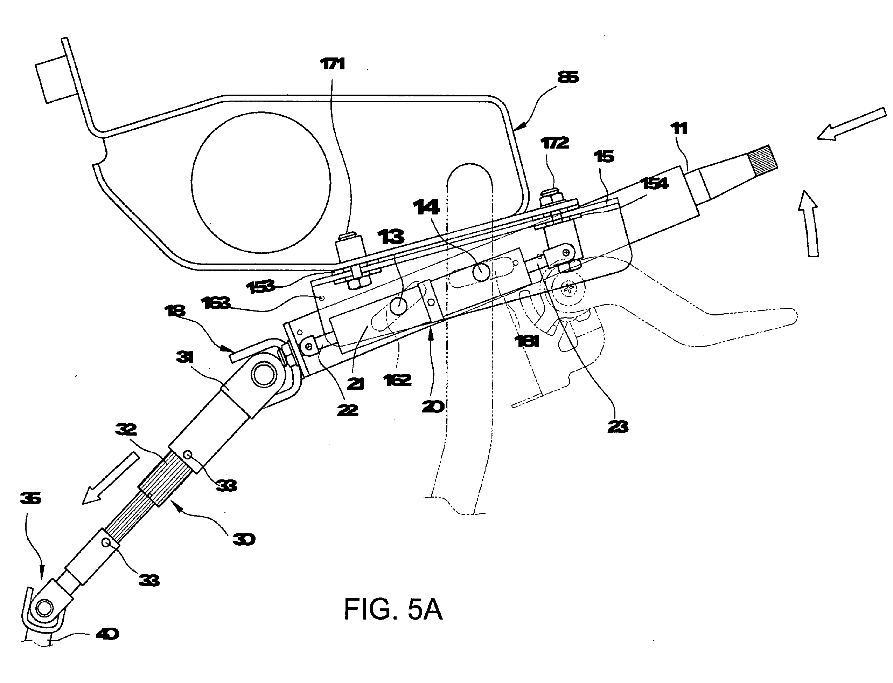

Additionally, at the end of the steering column 11 opposite to the steering wheel 88 is provided with a universal joint 18. The telescopic device 30 is connected to the universal joint 18. The telescopic device 30 may utilize another universal universal joint 35 to connect to a typical connector 40. The connector 40 is connected to front wheels of the vehicle 80 so as to control a rotating direction of the front wheels. The connector 40 is a typical device and thus will not be described in details hereinafter. A screwing tube 31 and screwing lever 32 can be inserted correspondingly on the telescopic device 30. One or more selectively releasable latches 33 may be provided between the screwing tube 31 and the screwing lever 32. The releasable latch 33 may temporarily affix the screwing tube 31 and the screwing lever 32, when the steering wheel 88 and the steering column 11 collapse in relation to vehicle 80, the releasable latch 33 may selectively removed to absorb the moving distance of the collapsing steering column 11, as shown in Figs. 5A~5C.

The actuation unit 70 may have a bumper 76 used to sense a hit of vehicle 80 to an object or being hit by an object and enables the moving unit 20 to move the steering column 11 in relation to the movement of the vehicle 80, thereby moving the steering wheel 88 away from the driver. The actuation unit 70 may include one or more cylinder 71 connecting to the cylinder 21 of the moving unit 20. The cylinder 71 may be protruded with a rod 75 connecting to the bumper 76. One end of the rod 75 within the cylinder 71 has a piston and the cylinder 71 have hydraulic oil or liquid therein.

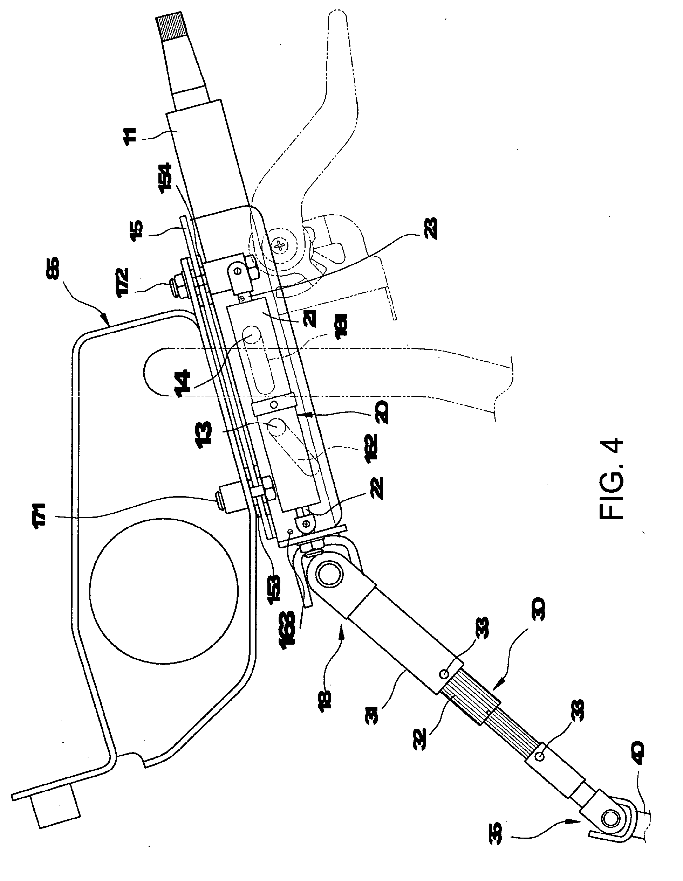

In operation, when a car accident occurs, or when vehicle 80 is hit by an object, or when vehicle 80 hits an object, the bumper 76 of the actuation unit 70 is activated, and the liquid or hydraulic oil is directly input to the cylinder 21 of the moving unit 20, as shown in Figs. 1 and 4. The first and second rods 22 and 23 of the moving unit 20 of the cylinder 21 are extended, as shown in Figs. 5A-5C such that the shell 12 is correspondingly moved by the movement of the first and second sliding boss 13 and 14 in relation to the first and second slots 161 and 162 in the side pieces 16 of the first cover 15, and thus the shell 12 generates a first segment of the sliding, as shown in Fig. 5A.

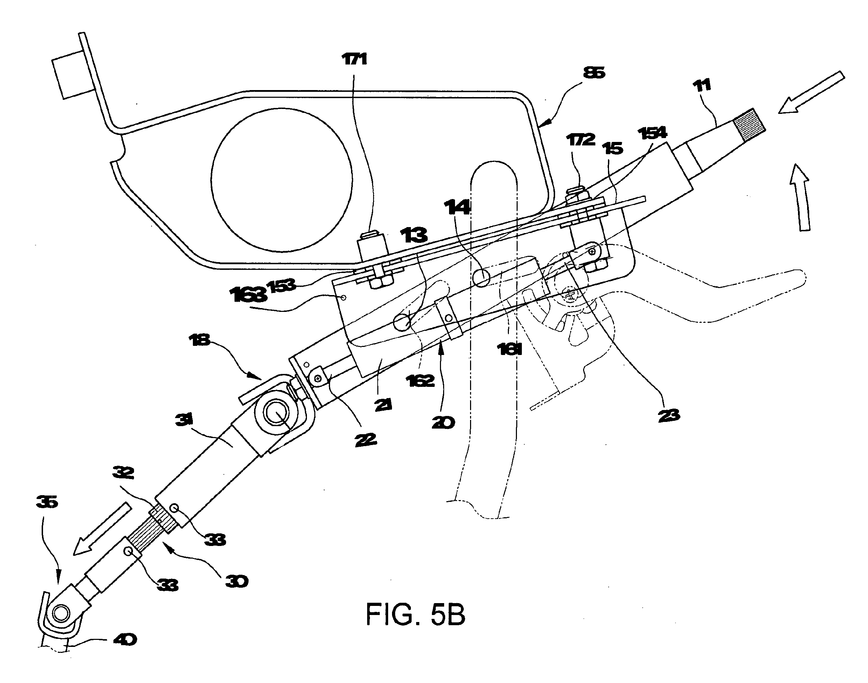

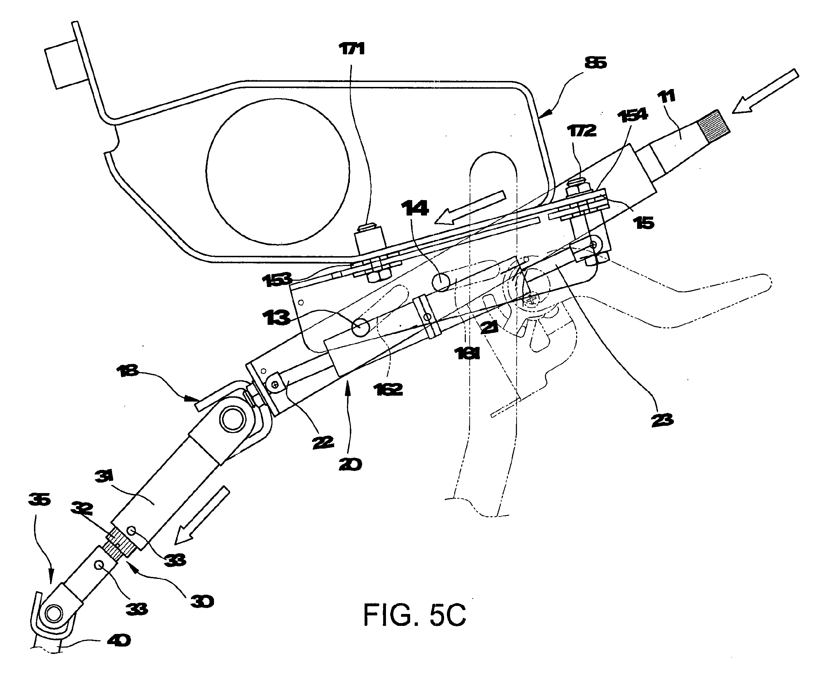

When hitting impact is greater, the first and second rods 22 and 23 of the cylinder 21 are further extended. In the meantime, the boss 13 of the shell 12 is stopped at the end of the first slots 161, therefore, the shell 12 may be influenced by the movement of the second sliding block 14 along the slop of the second slot 162 of the first cover 15 such that the shell 12 may move the steering column 11 to generate an inclination movement, as shown in Fig. 5B. The steering wheel 88 is thus moved further away from the driver. Furthermore, when the cylinder 21 is forced such that the first and second rods 22 and 23 are further extended, because the first and second sliding boss 13 and 14 of the shell 12 are stopped at the first and second slots 161 and 162 of the first cover 15, respectively, the first and second slots 151 and 152 of the first cover 15 help the first and second threaded bolts 171 and 172 locked to the frame 85 to slide, as shown in Fig. 5C. The first cover 15 moves the shell 12 and the steering wheel 88 on the steering column 11 further away from the driver. When the steering column 11 collapses in relation to the vehicle 80, the telescopic device 30 is forced to remove the releasable latchs 33 between the screwing tube 31 and the screwing lever 32 such that the screwing tube 31 and the screwing lever 32 are correspondingly engaged such that when a further crash occurs, the steering column 11 and the steering wheel 88 may be relatively moved away from the driver. As a result, the distance between the driver and the steering wheel 88 is increased, thereby preventing the driver from directly crashing into the steering wheel 88 and reducing the crashing impact between the driver and the auxiliary air bag.

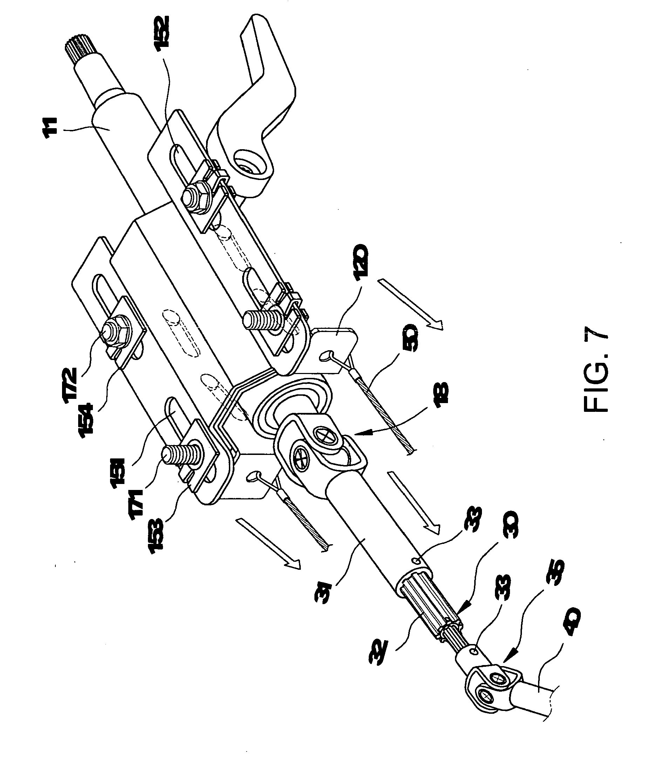

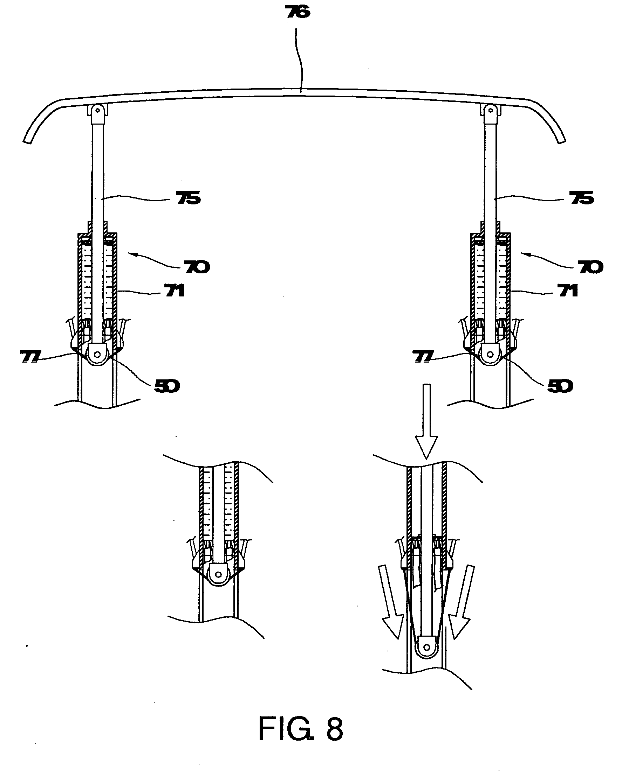

As shown in Fig. 7, the moving unit 20 of the shell 10 is further provided with one or more cables 50 on the fixing element 12 of the steering column 11. The cable 50 may be enabled by the actuation unit 70. As shown in Fig. 8, the actuation unit 70 further includes a pulley 77 provided in the rod 75 of the cylinder 71. The cable 50 is fixed to the cylinder 71 after circling the pulley 77. When a vehicle 80 experiences a crash, the bumper 76 of the actuation unit 70 may press the rod 75. The shortening of the rod 75 may cause the pulley 77 to move the cable 50 such that the cable 50 may directly pull the shell 12 and the steering column 11 in relation to the vehicle 80 to collapse, thereby moving the steering column 11 and the steering wheel 88 away from the driver.

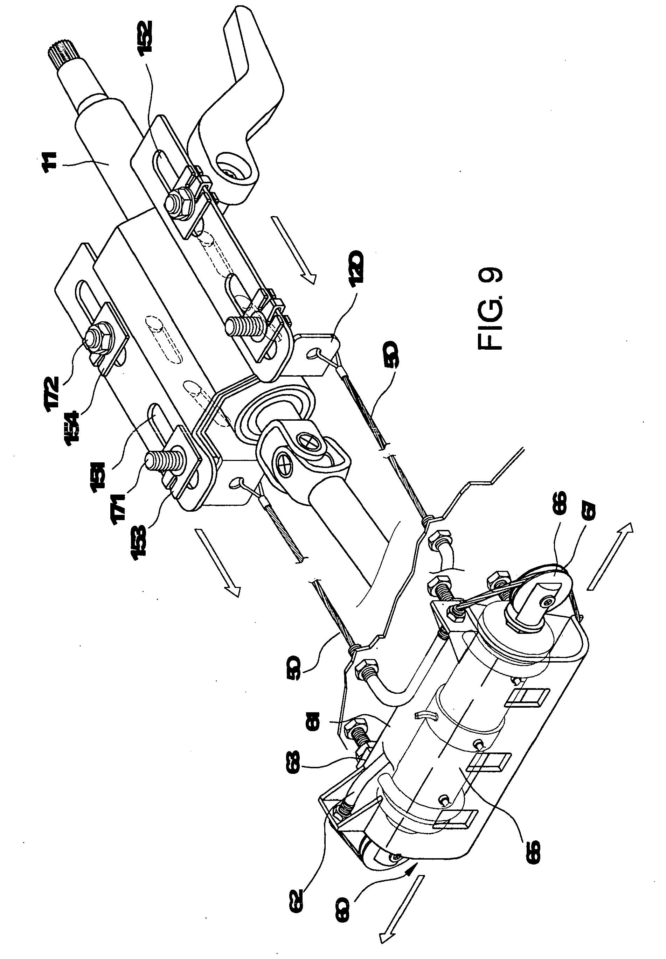

An actuation unit 60 is provided between the actuation unit 70 and the cable 50 on the moving unit 20, as shown in Fig. 9. The actuation unit 60 may be a frame 61 affixed within the vehicle 80. A top surface of the frame 61 is pivotally provided with two corresponding screwing sleeves 62. The frame 61 is provided with a frisket 63 for the cylinder on the vehicle 80. The screwing sleeve 62 may be provided with adjustable length and direction such that the actuation unit 60 may be locked at an appropriate position depending on vehicle without the restriction of the certain direction or collapsing movement of the steering column 11 and the steering wheel 88.

Furthermore, an extension of the cylinder 65 is provided within the frame 61. The movement of the extension of the cylinder 65 comes from the selective activation of the actuation unit 70. The acting force may be hydraulic oil, liquid, high pressure gas or explosive gas or a mixture thereof. The activation of the actuation unit 70 may come from a direct hit of vehicle 80, or a signal from a central ECU, such as the signal to activate the inflation of the auxiliary air bag. Two sides of the cylinder 65 may have a leading pulley 66, respectively, capable of simultaneous extension. A furrow 67 may be provided along a circumference of the leading pulley 66 being surrounded by one or more cables 50. After the cable 50 is pulled from the shell 12, a screwing sleeve 62 may surround the leading pulley 66 at the same side, and then surround the leading pulley 66 at another side. The screwing sleeve 62 may then connect to the shell 12.

In operation, when vehicle 80 experiences a crash at any portion, the bumper 76 of the actuation unit 70 may sense the crash, and move the extension of the cylinder 65 of the actuation unit 60 such that the two leading pulleys 66 of the extension of the cylinder 65 may extend simultaneously. The surrounding cable 50 may be rapidly pulled such that the cable 50 may directly pull the shell 12 and the steering column 11 and collapse in relation to the vehicle 80, thereby moving the steering column 11 and the steering wheel 88 away from the driver.

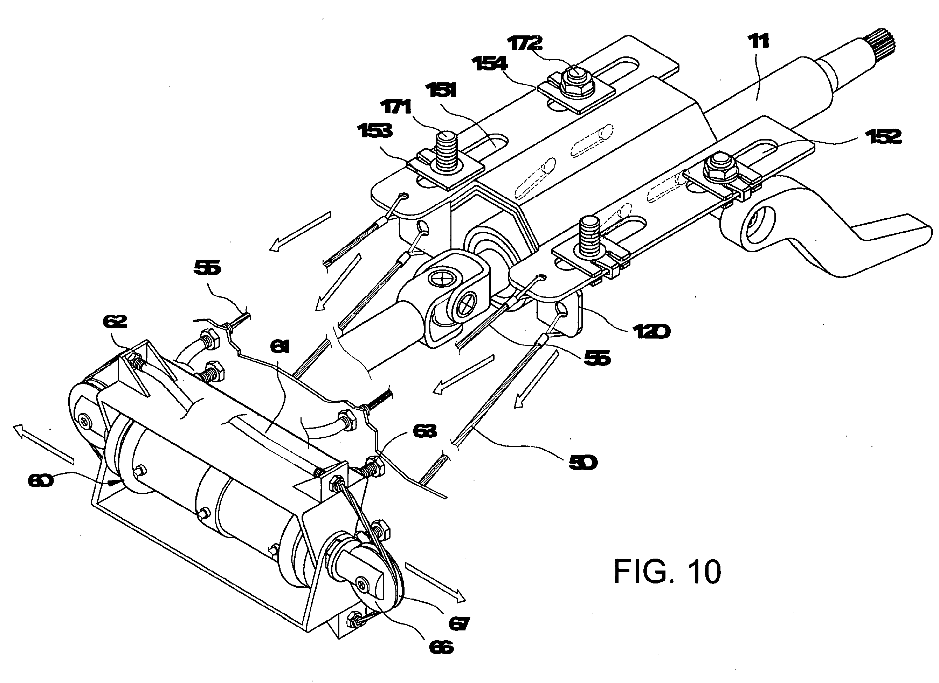

In another embodiment of the actuation unit 60, as shown in Fig. 10, a top surface of the frame 61 of the actuation unit 60 is pivotally provided with two sets of corresponding screwing sleeves 62. The shell 12 and the first cover 15 are provided with a cable 50 and 55, respectively, wherein the cable 55 connecting the first cover 15 is connected to another cable 50 of the shell 12. After the movement of the two sets of cables 50 and 55, the first cover 15 and the shell 12 may be pulled simultaneously, thereby allowing the steering column 11 and the steering wheel 88 to relatively move further away from the driver.

Therefore, the automatic shell 10 of the present invention may be provided in vehicle 80. When vehicle 80 is hit by an object or hits an object, the steering wheel 88 and steering column 11 of vehicle 80 may collapse, thereby moving away from the driver. At the same time, the design of the first cover 15 with the see through groove 155 and the second slots 162 with the slope segment may cause the steering column 11 I to slide with an angle of inclination during the process; as a result, the problem of close proximity between the driver and the steering wheel due to the heights of the drivers may be overcome. The injury that may be caused by the driver's crashing into the steering wheel 88 due to any portion of the automobile being hit in an accident may be effectively reduced.

## Claims

1. An automatic shell for a steering wheel, comprising:
a steering wheel (88), provided in a vehicle (80) through a steering column (11); said steering column (11) being provided in a shell (12), and two sides of said shell (12) are provided with a first boss (13) and a second boss (14), respectively, and said shell (12) is slidably provided within a first cover (15), said first cover (15) is formed with at least a first slot (151) and a second slot (152) so as to utilize a first threaded bolt (171) and a second threaded bolt (172) to lock in said vehicle (80), respectively, said two sides of said first cover (15) have a first and a second slot (161) and (162), respectively, to correspond to said first and second bosses (13) and (14), and said shell (12) can be moved by said moving unit (20) so as to move said steering column (11) and said steering wheel (88) away from said driver;
a moving unit (20) provided to move said shell (12) and said first cover (15),
said first cover (15) provided within said vehicle (80), said shell (12) provided with said steering column (11) with said steering wheel (88), said shell (12) and said first cover (15) provided with said first slot (151) and said second slot (152) and said first threaded bolt (171) and said second threaded bolt (172), respectively, so as to move said shell (12) and said first cover (15) when a car accident occurs such that said steering column (11) with said steering wheel (88) is moved in relation to said vehicle (80);
an actuation unit (70) capable of sensing a crash when said car accident occurs, and enabling said moving unit (20) to move said steering column (11) so as to selectively move said steering wheel (88) away from a driver;
a telescopic device (30), one end thereof connecting to said steering column (11) with said steering wheel (88), the other end thereof connecting to a connector (40), said connector (40) capable of controlling a rotating direction of front wheels, said telescopic device (30) capable of selectively absorbing a moving distance of said steering column's (11) collapse when said car accident occurs.

2. The automatic shell of claim 1, wherein said second slot (162) of said first cover (15) is provided with a slope segment extending downward, and a front end of said first cover (15) is formed with a see through groove (155) to allow said steering column (11) to generate an angle of inclination and a movement so as to move said steering wheel (88) away from said driver.

3. The automatic shell of claim 1 or 2, wherein said actuation unit (70) has a bumper (76) for sensing a crash of said vehicle (80), said actuation unit (70) comprises a cylinder (71) connecting to said moving unit (20), and said cylinder (71) is protruded with a rod (75) connected to said bumper (76), one end of said rod (75) has a piston, an acting source of said cylinder (71) may be a hydraulic oil, liquid, high pressure gas, or explosive gas or a mixture thereof.

4. The automatic shell of one of claims 1 to 3, wherein said moving unit (20) comprises at least a cylinder (21), said cylinder (21) has at least one rod (22), two ends of said cylinder (21) are affixed to said steering column (11) and said vehicle (80), respectively, and said rod (22) of said cylinder (21) is enabled by said actuation unit (70).

5. The automatic shell of claim 1, wherein said steering column (11) is provided at said first cover (15), said first cover (15) has at least a first cable and a second cable, respectively, utilizing a first threaded bolt (171) and a second threaded bolts (172) on said slots (151) and (152) to be locked to said vehicle (80), and said first cover (15) is pulled by said moving unit (20) so as to pull said steering column (11) and said steering wheel (88) away from said driver.

6. The automatic shell of claim 1, 2, 3, or 5, wherein said moving unit (20) comprises at least a screwing sleeve (62), said screwing sleeve (62) is provided a cable (50), one end thereof is affixed to said shell (12), and the other end thereof is connected to said actuation unit (70) through a frisket (63) such that said actuation unit (70) may be arbitrarily affixed through a length and a direction of said two ends of said screwing sleeve (62), said cable (50) can pull said steering column (11) and said steering wheel (88) to move away from said driver.

7. The automatic shell of claim 6, wherein said actuation unit (70) comprises said bumper (76) for sensing a crash of said vehicle (80), said actuation unit (70) comprises at least one cylinder (71) connecting said moving unit (20), and one end protruded from said cylinder (71) is provided with a pulley (77) within said cylinder (71) such that said cable (50) sleeveing said pulley (77) may be pulled by an shrinking movement of a rod (75) of said cylinder (71), said steering column (11) connected to said bumper (76) moves said steering wheel (88) away from said driver, said rod (75) has a pulley (77) provided at one end of said cylinder (71), and the other end of said cable (50) is provided to said steering column (11) with said steering wheel (88).

8. The automatic shell of claim 6 or 7, wherein an actuation unit (60) is provided between said cable (50) of said moving unit (20) and said actuation unit (70), said actuation unit (60) has a frame (61) capable of being locked with said vehicle (80), a top surface of said frame (61) is pivotally provided with at least two corresponding friskets (63), said screwing sleeve (62) can be affixed to said frisket (63), said frame (61) is provided with an extension of the cylinder (65) being moved by said actuation unit (70), two sides of said extension of the cylinder (65) have flexible leading pulleys (66), when one or more cable (50) is affixed to said inner shell (12), said flexible leading pulleys (66) at the same side can be surrounded after passing one side of said frisket (63) and then to the other side of said leading pulleys (66), and connected to said shell (12) and said first cover (15) after passing said frisket (63) on said side so as to rapidly pull said surrounding cable (50) to move said steering wheel (88) and said steering column (11) away from said driver.

9. The automatic shell of one of claims 1 to 8, wherein said moving unit (20) has one or more releasable latch (163) capable of selectively removed from said shell (12) and said first cover (15) to move in relation to said inner shell (12), said releasable latch (163) can be temporarily fixed to said inner shell (12), when said steering wheel (88) and said steering column (11) collapse, said releasable latch (163) can be selectively removed such that said steering wheel (88) and said steering column (11) is expected to move at an angle of inclination.

## Patentansprüche

1. Ein automatisches Gehäuse für ein Lenkrad, mit:
einem Lenkrad (88), das sich in einem Fahrzeug (80) durch eine Lenksäule (11) hindurch befindet, wobei sich die Lenksäule (11) in einem Gehäuse (12) befindet und sich an beiden Seiten des Gehäuses (12) jeweils ein erster runder Vorsprung (13) und ein zweiter runder Vorsprung (14) befindet, und wobei sich das Gehäuse (12) verschiebbar in einer ersten Abdeckung (15) befindet, wobei die erste Abdeckung (15) mit mindestens einem ersten Schlitz (151) und einem zweiten Schlitz (152) ausgeformt ist, um einen ersten Gewindebolzen (171) beziehungsweise einen zweiten Gewindebolzen (172) zu verwenden, um sich im Fahrzeug (80) zu arretieren, wobei die beiden Seiten der ersten Abdeckung (15) einen ersten und zweiten Schlitz (161) beziehungsweise (162) aufweisen, die den ersten und zweiten runden Vorsprüngen (13) und (14) entsprechen, und wobei das Gehäuse (12) durch die Bewegungseinheit (20) bewegt werden kann, um die Lenksäule (11) und das Lenkrad (88) vom Fahrer wegzubewegen;
einer Bewegungseinheit (20), die dazu vorgesehen ist, das Gehäuse (12) und die erste Abdeckung (15) zu bewegen;
wobei die erste Abdeckung (15) sich innerhalb des Fahrzeugs (80) befindet, wobei das Gehäuse (12) mit der Lenksäule (11) und mit dem Lenkrad (88) ausgestattet ist, wobei das Gehäuse (12) und die erste Abdeckung (15) mit dem ersten Schlitz (151) und dem zweiten Schlitz (152) beziehungsweise dem ersten Gewindebolzen (171) und dem zweiten Gewindebolzen (172) ausgestattet sind, um so das Gehäuse (12) und die erste Abdeckung (15) zu bewegen, wenn sich ein Autounfall ereignet, so dass die Lenksäule (11) mit dem Lenkrad (88) bezüglich des Fahrzeugs (80) bewegt wird;
einer Antriebseinheit (70), die dazu imstande ist, einen Aufprall zu detektieren wenn sich der Autounfall ereignet, und es der Bewegungseinheit (20) zu ermöglichen, die Lenksäule (11) zu bewegen, um so das Lenkrad (88) gezielt vom Fahrer wegzubewegen;
einem zusammenschiebbaren Element (30), dessen eines Ende mit der Lenksäule (11) mit dem Lenkrad (88) verbunden ist und dessen anderes Ende mit einer Kupplung (40) verbunden ist, wobei die Kupplung (40) dazu imstande ist, eine Rotationsrichtung der Vorderräder zu steuern, wobei das zusammenschiebbare Element (30) zur gezielten Aufnahme einer Bewegungsdistanz des Zusammenschiebens der Lenksäule (11) imstande ist, wenn der Autounfall auftritt.

2. Automatisches Gehäuse gemäß Anspruch 1, **dadurch gekennzeichnet, dass** der zweite Schlitz (162) der ersten Abdeckung (15) mit einem schrägen Abschnitt ausgestattet ist, der nach unten herausragt und wobei ein vorderes Ende der ersten Abdeckung (15) einen durchgängigen Einschnitt (155) aufweist, um es der Lenksäule (11) zu ermöglichen, einen schiefen Winkel und eine Bewegung zu erzeugen, um das Lenkrad (88) von dem Fahrer wegzubewegen.

3. Automatisches Gehäuse gemäß Anspruch 1 oder 2, **dadurch gekennzeichnet, dass** die Antriebseinheit (70) eine Stoßstange (76) zum Detektieren eines Aufpralls des Fahrzeugs (80) aufweist, wobei die Antriebseinheit (70) einen Zylinder (71) enthält, der mit der Bewegungseinheit (20) verbunden ist, wobei aus dem Zylinder (71) eine Stange (75) hervorragt, die mit der Stoßstange (76) verbunden ist, wobei sich an einem Ende der Stange (75) ein Kolben befindet, wobei eine Bewegungsquelle des Zylinders (71) ein hydraulisches Öl, flüssiges Hochdruckgas oder explosives Gas oder eine Mischung daraus sein könnte.

4. Automatisches Gehäuse gemäß einem der Ansprüche 1 bis 3, **dadurch gekennzeichnet, dass** die Bewegungseinheit (20) mindestens einen Zylinder (21) enthält, wobei der Zylinder (21) mindestens eine Stange (22) enthält, wobei zwei Enden des Zylinders an der Lenksäule (11) beziehungsweise am Fahrzeug (80) befestigt sind, und die Stange (22) des Zylinders (21) durch die Bewegungseinheit (70) aktiviert wird.

5. Automatisches Gehäuse gemäß Anspruch 1, **dadurch gekennzeichnet, dass** sich die Lenksäule (11) unter der ersten Abdeckung (15) befindet, wobei die erste Abdeckung (15) mindestens jeweils ein erstes Kabel und ein zweites Kabel enthält, wobei ein erster Gewindebolzen (171) und ein zweiter Gewindebolzen (172) in den Schlitzen (151) und (152) verwendet werden, um am Fahrzeug (80) arretiert zu werden, und wobei die erste Abdeckung (15) durch die Bewegungseinheit (20) gezogen wird, um so die Lenksäule (11) und das Lenkrad (88) vom Fahrer wegzuziehen.

6. Automatisches Gehäuse gemäß Anspruch 1, 2, 3 oder 5, **dadurch gekennzeichnet, dass** die Bewegungseinheit (20) mindestens eine Verschraubungsbuchse (62) enthält, wobei die Verschraubungsbuchse (62) mit einem Kabel (50) ausgestattet ist, dessen eines Ende am Gehäuse (12) befestigt ist und dessen anderes Ende mit der Antriebseinheit (70) durch eine Schablone (63) verbunden ist, so dass die Antriebseinheit (70) beliebig in einer Länge und Richtung der beiden Enden der Verschraubungsbuchse (62) befestigt werden kann, wobei das Kabel (50) die Lenksäule (11) und das Lenkrad (88) vom Fahrer wegziehen kann.

7. Automatisches Gehäuse gemäß Anspruch 6, **dadurch gekennzeichnet, dass** die Antriebseinheit (70) die Stoßstange (76) enthält, um einen Aufprall des Fahrzeugs (80) zu detektieren, wobei die Antriebseinheit (70) mindestens einen Zylinder (71) beinhaltet, der die Bewegungseinheit (20) verbindet, wobei ein Ende, das aus dem Zylinder (71) herausragt, mit einer Rillenscheibe (77) innerhalb des Zylinders ausgestattet ist, so dass das Kabel (50), das durch die Rillenscheibe (77) läuft, durch eine zusammenziehende Bewegung einer Stange (75) des Zylinders (71) gezogen werden kann, wobei die Lenksäule (11), die mit der Stoßstange (76) verbunden ist, das Lenkrad (88) vom Fahrer wegbewegt, wobei die Stange (75) eine Rillenscheibe (77) aufweist, die sich an einem Ende des Zylinders (71) befindet und sich das andere Ende des Kabels (50) in der Lenksäule (11) mit dem Lenkrad (88) befindet.

8. Automatisches Gehäuse gemäß Anspruch 6 oder 7, **dadurch gekennzeichnet, dass** sich eine Antriebseinheit (60) zwischen dem Kabel (50) der Bewegungseinheit (20) und der Antriebseinheit (70) befindet, wobei die Bewegungseinheit (60) einen Rahmen (61) aufweist, der dazu imstande ist, an dem Fahrzeug (80) arretiert zu werden, wobei eine obere Fläche des Rahmens (61) drehbar mit mindestens zwei übereinstimmenden Schablonen (63) ausgestattet ist, wobei die Verschraubungsbuchse (62) an der Schablone (63) befestigt werden kann, wobei der Rahmen (61) mit einem Ansatzstück des Zylinders (65) ausgestattet ist, der durch die Antriebseinheit (70) bewegt wird, wobei zwei Seiten des Ansatzstücks des Zylinders (65) flexible Führungslenkrollen (66) aufweisen, wenn ein oder mehrere Kabel (50) am inneren Gehäuse (12) befestigt sind, wobei die flexiblen Führungslenkrollen (66) auf der gleichen Seite, nachdem sie eine Seite der Schablone (63) und dann die andere Seite der Führungslenkrollen (66) passiert haben, umschlossen und mit dem Gehäuse (12) der ersten Abdeckung (15) verbunden werden können, nachdem sie die Schablone (63) auf der Seite passiert hat, um so schnell das sie umschließende Kabel (50) zu ziehen, um das Lenkrad (88) und die Lenksäule (11) vom Fahrer wegzubewegen.

9. Automatisches Gehäuse gemäß einem der Ansprüche 1 bis 8, **dadurch gekennzeichnet, dass** die Bewegungseinheit (20) einen oder mehrere auslösbare Riegel (163) aufweist, die dazu imstande sind, wahlweise vom Gehäuse (12) und der ersten Abdeckung (15) entfernt zu werden, um sich relativ zum inneren Gehäuse (12) zu bewegen, wobei der auslösbare Riegel (163) vorübergehend am inneren Gehäuse (12) befestigt werden kann, wenn sich das Lenkrad (88) und die Lenksäule (11) zusammenschieben, wobei die auslösbare Sperre (163) wahlweise entfernt werden kann, so dass sich das Lenkrad (88) und die Lenksäule (11) erwartungsgemäß im schrägen Winkel bewegen.

## Revendications

1. Coque automatique pour volant de direction, comprenant :
un volant de direction (88) prévu dans un véhicule (80) à travers une colonne de direction (11); ladite colonne de direction (11) étant conçue dans une coque (12), et deux côtés de ladite coque (12) étant respectivement pourvus d'un premier bossage (13) et d'un second bossage (14), et ladite coque (12) étant conçue de façon à pouvoir coulisser à l'intérieur d'un premier cache (15), ledit premier cache (15) étant formé avec au moins une première fente (151) et une seconde fente (152) de façon à utiliser un premier écrou fileté (171) et un second écrou fileté (172) pour verrouiller ledit véhicule (80), respectivement, lesdits deux côtés dudit premier cache (15) ayant une première et une seconde fente (161) et (162), respectivement, correspondant auxdits premier et second bossages (13) et (14), et ladite coque (12) pouvant être déplacée par ladite unité de déplacement (20) de façon à écarter ladite colonne de direction (11) et ledit volant de direction (88) dudit conducteur ;
une unité de déplacement (20) prévue pour déplacer ladite coque (12) et ledit premier cache (15) ;
ledit premier cache (15) prévu à l'intérieur dudit véhicule (80), ladite coque (12) pourvue de ladite colonne de direction (11) dotée dudit volant de direction (88), ladite coque (12) et ledit premier cache (15) pourvus de ladite première fente (151) et de ladite seconde fente (152) et dudit premier écrou fileté (171) et dudit second écrou fileté (172), respectivement, de façon à déplacer ladite coque (12) et ledit premier cache (15) lorsqu'un accident de voiture se produit de telle sorte que ladite colonne de direction (11) est déplacée avec ledit volant de direction (88) par rapport audit véhicule (80) ;
une unité d'actionnement (70) capable de détecter un choc lorsque ledit accident de voiture se produit et permettant à ladite unité de déplacement (20) de déplacer ladite colonne de direction (11) de façon à écarter de manière sélective ledit volant de direction (88) du conducteur ; un dispositif télescopique (30) dont une extrémité est reliée à ladite colonne de direction (11) dotée du volant de direction (88) et l'autre extrémité est reliée à un connecteur (40), ledit connecteur (40) étant capable de commander une direction de rotation des roues avant, ledit dispositif télescopique (30) étant capable d'absorber de manière sélective une distance de déplacement de ladite colonne de direction (11) s'effondrant lorsque ledit accident de voiture se produit.

2. Coque automatique selon la revendication 1, dans laquelle ladite seconde fente (162) dudit premier cache (15) est pourvue d'un segment incliné s'étendant vers le bas et dans laquelle une extrémité frontale dudit premier cache (15) est formée avec une rainure de regard (155) pour permettre à ladite colonne de direction (11) de produire un angle d'inclinaison et un mouvement permettant d'écarter ledit volant de direction (88) dudit conducteur.

3. Coque automatique selon la revendication 1 ou 2, dans laquelle ladite unité d'actionnement (70) a un butoir (76) pour détecter un choc dudit véhicule (80), ladite unité d'actionnement (70) comprenant un vérin (71) relié à ladite unité de déplacement (20) et dans laquelle ledit vérin (71) ressort avec une tige (75) reliée audit butoir (76), une extrémité de ladite tige (75) ayant un piston, la source d'actionnement dudit vérin (71) pouvant être une huile hydraulique, un liquide, un gaz sous haute pression, un gaz explosif ou un mélange de ceux-ci.

4. Coque automatique selon l'une quelconque des revendications 1 à 3, dans laquelle ladite unité de déplacement (20) comprend au moins un vérin (21), ledit vérin (21) étant doté d'au moins une tige (22), deux extrémités dudit vérin (21) étant fixées à ladite colonne de direction (11) et audit véhicule (80), respectivement, et ladite tige (22) dudit vérin (21) étant activée par ladite unité d'actionnement (70).

5. Coque automatique selon la revendication 1, dans laquelle ladite colonne de direction (11) est prévue au niveau dudit premier cache (15), ledit premier cache (15) étant doté d'au moins un premier câble et d'un second câble, respectivement, utilisant un premier écrou fileté (171) et un second écrou fileté (172) sur lesdites fentes (151) et (152) à verrouiller audit véhicule (80), et ledit premier cache (15) étant tiré par ladite unité de déplacement (20) de façon à écarter par traction ladite colonne de direction (11) et ledit volant de direction (88) dudit conducteur.

6. Coque automatique selon la revendication 1, 2, 3 ou 5, dans laquelle ladite unité de déplacement (20) comprend au moins un manchon de vissage (62), ledit manchon de vissage (62) étant pourvu d'un câble (50) dont une extrémité est fixée à ladite coque (12), et l'autre extrémité est reliée à ladite unité d'actionnement (70) à travers une frisquette (63) de telle sorte que ladite unité d'actionnement (70) puisse être fixée arbitrairement à travers une longueur et une direction desdites deux extrémités dudit manchon de vissage (62), ledit câble (50) pouvant tirer ladite colonne de direction (11) et ledit volant de direction (88) pour les écarter dudit conducteur.

7. Coque automatique selon la revendication 6, dans laquelle ladite unité d'actionnement (70) comprend ledit butoir (76) pour détecter un choc dudit véhicule (80), ladite unité d'actionnement (70) comprenant au moins un vérin (71) reliant ladite unité de déplacement (20) et une extrémité saillant dudit vérin (71) étant pourvue d'une poulie (77) positionnée à l'intérieur dudit vérin (71) de telle sorte que ledit câble (50) coulissant ladite poulie (77) puisse être tiré par un mouvement de rétrécissement d'une tige (75) dudit vérin (71), ladite colonne de direction (11) reliée audit butoir (76) écartant ledit volant de direction (88) dudit conducteur, ladite tige (75) étant dotée d'une poulie (77) prévue à une extrémité dudit vérin (71) et l'autre extrémité dudit câble (50) étant prévue sur ladite colonne de direction (11) avec ledit volant de direction (88).

8. Coque automatique selon la revendication 6 ou 7, dans laquelle une unité d'actionnement (60) est prévue entre ledit câble (50) de ladite unité de déplacement (20) et ladite unité d'actionnement (70), ladite unité d'actionnement (60) étant dotée d'un cadre (61) pouvant être verrouillé audit véhicule (80), une surface supérieure dudit cadre (61) étant pourvue de façon pivotante d'au moins deux frisquettes (63) correspondantes, ledit manchon de vissage (62) pouvant être fixé à ladite frisquette (63), ledit cadre (61) étant pourvu d'un prolongement du vérin (65) déplacé par ladite unité d'actionnement (70), deux côtés dudit prolongement du vérin (65) ayant des poulies (66) principales flexibles lorsqu'un ou plusieurs câbles (50) sont fixés à ladite coque intérieure (12), lesdites poulies (66) principales flexibles d'un même côté pouvant être encerclées après passage d'un côté de ladite frisquette (63) puis de l'autre côté desdites poulies (66) principales et reliées à ladite coque (12) et audit premier cache (15) après passage de ladite frisquette (63) sur ledit côté de façon à tirer rapidement ledit câble (50) environnant pour écarter ledit volant de direction (88) et ladite colonne de direction (11) dudit conducteur.

9. Coque automatique selon l'une quelconque des revendications 1 à 8, dans laquelle ladite unité de déplacement (20) a un ou plusieurs loquets de libération (163) pouvant être retirés de manière sélective de ladite coque (12) et dudit premier cache (15) pour être déplacés par rapport à ladite coque intérieure (12), ledit loquet de libération (163) pouvant être fixé temporairement à ladite coque intérieure (12), lorsque ledit volant de direction (88) et ladite colonne de direction (11) s'effondrent, ledit loquet de libération (163) pouvant être retiré de manière sélective de telle sorte que ledit volant de direction (88) et ladite colonne de direction (11) se déplacent de façon prévisible suivant un certain angle d'inclinaison.
